# EUROPEAN PATENT APPLICATION

(11) **EP 4 715 175 A1**
(43) Date of publication of application: **25.03.2026**
(21) Application number: 25202995.4
(22) Date of filing: 18.09.2025
(51) Int. Cl.: F02B 19/08, F02B 19/12, F02B 19/16, F02B 19/18, H01T 13/54

(54) **ENGINE WITH A PRE-CHAMBER SPARK PLUG**

(30) Priority: 20.09.2024 JP 2024163541
(71) Applicant: Yanmar Holdings Co., Ltd., Osaka-shi, Osaka (JP)
(72) Inventor: TAKEMOTO, Toru, Osaka-shi (JP); IZUMI, Naoto, Osaka-shi (JP); HONDA, Yusuke, Osaka-shi (JP); TOSHINAGA, Kazuteru, Osaka-shi (JP)
(74) Representative: Sekiguchi, Kazuya

(57) **Abstract**

[Problem] The present disclosure provides a pre-chamber spark plug capable of adequately scavenging the pre-chamber.

[Solution] In an engine provided with a pre-chamber spark plug 20, the pre-chamber C2 is formed by a torch sleeve 30 mounted on a cylinder head and having nozzles 33, 33, ..., 34 and a spark plug 40. In the torch sleeve 30, a tip 32 protruding from the cylinder head has a tapering portion the diameter of which gradually decreases toward a piston, or specifically a tapered section. The tapered section is provided with a plurality of nozzles 33, 33, ....

## Description

### TECHNICAL FIELD

The present invention relates to an engine. Specifically, the present invention relates to the improvement of an engine provided with a pre-chamber spark plug.

### BACKGROUND ART

As illustrated in Patent Documents 1 and 2, for example, engines that operate on gaseous fuels such as natural gas or hydrogen are known to be provided with a pre-chamber spark plug. In this type of engine, fresh air (mixture of air, gaseous fuel, and fuel) supplied from an intake port to a main chamber (main combustion chamber) is compressed by rising a piston, the compressed fresh air flows into a pre-chamber of the pre-chamber spark plug, and the pre-chamber spark plug is ignited to produce a flame in the pre-chamber. The flame generated in the pre-chamber is then ejected from the nozzle of the pre-chamber spark plug into the main chamber as a torch flame, thereby spreading the combustion of the fresh air into the main chamber.

Patent Document 1 discloses that a torch flame, which is ejected by the pressure difference with the main chamber connected by the nozzle of the pre-chamber spark plug, enables rapid combustion of the main chamber mixture.

Patent Document 2 discloses that combustion performance in the pre-chamber can be improved by generating a tumble flow in the pre-chamber and scavenging the residual gas in the pre-chamber.

### PRIOR ART DOCUMENT

### PATENT DOCUMENT

Patent Document 1: United States Patent Application Publication No. 2009/0309475
Patent Document 2: Japanese Unexamined Patent Application Publication No. 2023-511328

### SUMMARY OF INVENTION

### TECHNICAL PROBLEM

In engines with pre-chamber spark plugs, it is required that the pre-chamber be sufficiently scavenged after the combustion cycle, but in the disclosure of Patent Document 1, the high-temperature residual combustion gas from the previous cycle in the area surrounded by the ground electrode and insulator is not scavenged and mixed by the fresh air coming in from the main chamber in the current cycle. The heat from the residual gas could cause pre-ignition.

In addition, the disclosure in Patent Document 2 has a difficulty in effectively scavenging the high-temperature residual combustion gases that entered the gap between the metal shell and the center electrode insulator of the spark plug, which is located at the upper back of the pre-chamber.

The present invention has been made in view of the above, and it is an object of the present invention to provide a pre-chamber spark plug capable of adequately scavenging the pre-chamber.

### SOLUTION TO PROBLEM

The solution of the present invention to achieve the above-mentioned purpose is based on an engine provided with a pre-chamber spark plug. In the engine, a pre-chamber is formed by a torch sleeve mounted on a cylinder head and having nozzles and a spark plug, the torch sleeve has a tapering portion where a tip protruding from the cylinder head decreases in diameter toward a piston, and the tapering portion is provided with the nozzle.

This particularity allows the distance between the nozzle of the torch sleeve and the vicinity of the combustion gas residual around the tip of the spark plug (for example, the insulator pocket between the insulator of the center electrode of the spark plug and the metal shell) to be shortened, so that the velocity of the fresh air flowing from the nozzle into the pre-chamber remains high and the fresh air can reach the combustion. In addition, the inner diameter of the pre-chamber can be made smaller (compacting the flow of fresh air in the pre-chamber), which allows fresh air to reach the residual combustion gas area more easily. These actions enable effective scavenging of combustion gases remaining in the residual combustion gas area and suppress pre-ignition.

More specifically, the tapering portion of the torch sleeve is tapered.

This allows the distance between the torch sleeve nozzle and the combustion gas residual area to be significantly shortened and the tapered shape can be optimized to effectively scavenge the residual combustion gas in the combustion gas residual area.

A central axis of the nozzle, when viewed from a direction along a central axis of the tapering portion, is inclined with respect to a tangential direction to an outer circumferential edge of the tapering portion from a main chamber side of the engine to the pre-chamber side within an angle range with an upper limit of 60° and a lower limit of 0°, and when viewed in a direction orthogonal to a central axis of the tapering portion, is directed from the main chamber side to the pre-chamber side toward a vicinity of an electrode of the spark plug.

According to this, when fresh air flows into the pre-chamber from the main chamber through the nozzles, a swirling flow of fresh air is generated in the pre-chamber, and the residual combustion gas area is effectively scavenged. In addition, when the electrode of the spark plug is close to the opening position of the nozzle (position of the opening facing the pre-chamber), and when the nozzles are located at multiple locations in the circumferential direction of the pre-chamber, the adjacent nozzles are also close to each other, which can reduce variation in the torch flame ejected from each nozzle to the main chamber. Also, after the ignition of the spark plug, the combustion in the pre-chamber is accelerated by the swirling flow generated in the pre-chamber, which increases the penetration of the torch flame into the main chamber, thereby also reducing the variation of the torch flame ejected from each nozzle into the main chamber. These actions allow for uniform combustion over the entire main chamber and suppress knocking of the engine.

The direction of a torch flame that is ejected from the pre-chamber into the main chamber through the nozzle is opposite to a swirl of intake air formed in the main chamber by an intake port of the engine.

In engines that do not have a fuel supply system to the pre-chamber other than the above-mentioned nozzles, there is a concern that the temperature of the torch flame ejected into the main chamber is relatively low, the amount of the torch flame is relatively small, and the penetration force of the torch flame is relatively small, resulting in a low combustion rate in the main chamber. In this case, if the intake air (mixture) between adjacent torch flames ejected from each of the multiple nozzles can be burned early, it is possible to keep the combustion rate in the main chamber high by reducing the ratio between the surface area and volume of the already burned area and by keeping the temperature near the flame surface high. In view of this point, in this solution, by reversing the direction of the torch flame that is ejected into the main chamber and the direction of the intake air swirl, the torch flame is not developed in the radial direction (cylinder wall direction), but in the circumferential direction, and the intake air between adjacent torch flames is burned earlier, thus keeping the combustion speed in the main chamber high. This allows the combustion rate in the main chamber to remain high.

The direction of the torch flame that is ejected from the pre-chamber into the main chamber by the nozzle may be in the same direction as the swirl of intake air formed in the main chamber by an intake port of the engine.

This solution is effective when the temperature of the torch flame ejected into the main chamber is relatively high, the volume of the torch flame is relatively large, and the penetration force of the torch flame is relatively large. In other words, by making the direction of the torch flame ejected into the main chamber and the direction of the intake air swirl the same, this swirl can be used to spread the torch flame quickly over a wide area, thereby obtaining a high combustion rate in the main chamber.

The tapering portion of the torch sleeve begins from the bottom of the cylinder head.

This allows the area of the torch sleeve facing the main chamber to be reduced while still achieving the above-described effects. In other words, the area of the torch sleeve that receives heat from the combustion gas in the main chamber can be reduced. Therefore, the temperature rise of the torch sleeve can be suppressed and the temperature rise of the fresh air in the pre-chamber can be suppressed.

### ADVANTAGEOUS EFFECTS OF INVENTION

In the present invention, in an engine with a pre-chamber spark plug in which the pre-chamber is formed by the torch sleeve and the spark plug, the tip of the torch sleeve is tapered and a nozzle is provided at the tapering portion. This makes it possible to shorten the distance between the nozzle of the torch sleeve and the combustion gas residual area at the vicinity of the tip of the spark plug, allowing the fresh air flowing into the pre-chamber from the nozzle to reach the combustion gas residual area while maintaining a high flow velocity. As a result, the combustion gas remaining in the residual combustion gas area can be effectively scavenged and pre-ignition can be suppressed.

### BRIEF DESCRIPTION OF DRAWINGS

FIG. 1 is a schematic diagram of the vicinity of a combustion chamber in an engine according to an embodiment;
FIG. 2A is a bottom view of a pre-chamber spark plug in the embodiment, FIG. 2B is a cross-sectional view along the B-B line in FIG. 2A, and FIG. 2C is a cross-sectional view along the C-C line in FIG. 2A;
FIG. 3 illustrates the shape of a pre-chamber of the pre-chamber spark plug in the embodiment with two dotted lines;
FIG. 4 is a view of a main chamber from the piston side in the embodiment;
FIG. 5A is a bottom view of the pre-chamber spark plug in the modification, FIG. 5B is a cross-sectional view along the B-B line in FIG. 5A, and FIG. 5C is a cross-sectional view along the C-C line in FIG. 5A;
FIG. 6 illustrates the shape of the pre-chamber of the pre-chamber spark plug of the modification with two dotted lines;
FIG. 7A is a bottom view of the pre-chamber spark plug in the comparative example, FIG. 7B is a cross-sectional view along the B-B line in FIG. 7A, and FIG. 7C is a cross-sectional view along the C-C line in FIG. 7A;
FIG. 8 illustrates the shape of the pre-chamber of the pre-chamber spark plug of the comparative example with two dotted lines;
FIG. 9 is an exemplary diagram of the shape of a torch flame when the main chamber is viewed from the piston side, FIG. 9A illustrates an example for the embodiment, FIG. 9B illustrates an example for the modification, and FIG. 9C illustrates an example for the comparative example; and
FIG. 10 illustrates the results of simulation calculations of the amount of carbon dioxide in the pre-chamber during the period from the intake to compression of the engine in the embodiment, the modification, and the comparative example, respectively.

### DESCRIPTION OF EMBODIMENTS

The following describes an embodiment of the present invention based on the drawings. The present embodiment describes a case in which the invention is applied to a hydrogen engine.

### Schematic Configuration of Engine

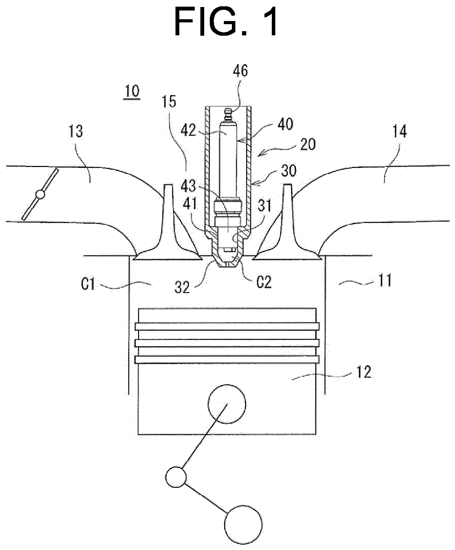

FIG. 1 is a schematic diagram of a vicinity of a combustion chamber in an engine 10 according to the present embodiment. As illustrated in FIG. 1, the engine 10 is provided with a pre-chamber spark plug 20. The engine 10 has a cylinder block 11 constituting a cylinder bore, and a cylinder head 15 mounted on top of the cylinder block 11. The pre-chamber spark plug 20 is mounted on the lower part of the cylinder head 15 at the center of the cylinder bore. Inside the cylinder block 11, a piston 12 is arranged to be able to move back and forth, and the space enclosed by the cylinder block 11, the piston 12, and the cylinder head 15 form the main chamber C1 which is the main combustion chamber. A pre-chamber C2 is provided at the tip (bottom end in FIG. 1) of the pre-chamber spark plug 20 which communicates with the main chamber C1. The configuration for providing this pre-chamber C2 is described below.

When the engine 10 is running, fresh air (intake air), which is a mixture of air and fuel (hydrogen), is introduced into the main chamber C1 through the intake port 13 in the cylinder head 15, and the compressed fresh air flows into the pre-chamber C2 as the piston 12 rises. In the pre-chamber C2, the pre-chamber spark plug 20 is ignited at a predetermined timing, and a flame is generated by the combustion of the fresh air. The flame is then ejected as a torch flame from the pre-chamber C2 into the main chamber C1, thereby spreading the combustion of the fresh air into the main chamber C1. This combustion of fresh air in the main chamber C1 pushes the piston 12 down and provides the driving force for the engine 10. The exhaust gas after combustion is discharged from the main chamber C1 through the exhaust port 14 in the cylinder head 15.

Immediately after ignition and combustion in the pre-chamber spark plug 20, high-temperature residual combustion gas remains in the pre-chamber C2. When fresh air flows in from the main chamber C1 in this cycle while high-temperature residual combustion gas from the previous cycle remains in the pre-chamber C2, and if the high-temperature residual combustion gas is not scavenged with the inflow of fresh air and the high-temperature residual combustion gas and fresh air are not mixed well, pre-ignition is likely to occur.

The pre-chamber spark plug 20 according to the present embodiment promotes scavenging and mixing of high-temperature residual combustion gas in the pre-chamber C2 and suppresses pre-ignition when fresh air flows in from the main chamber C1. The configuration of the pre-chamber spark plug 20 will be described below.

### Configuration of Pre-chamber Spark plug

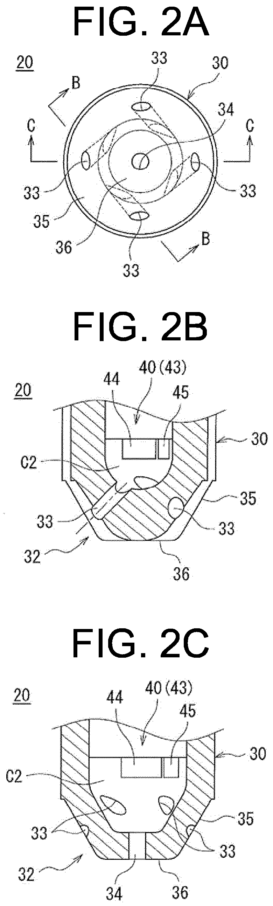

FIG. 2 illustrates the main parts of the pre-chamber spark plug 20 in the present embodiment. FIG. 2A is a bottom view of the pre-chamber spark plug 20, FIG. 2B is a cross-sectional view along line B-B in FIG. 2A, and FIG. 2C is a cross-sectional view along line C-C in FIG. 2A. As illustrated in FIGs. 1 and 2, the pre-chamber spark plug 20 constitutes a torch sleeve 30 and a spark plug 40.

The torch sleeve 30 consists of a bottomed cylindrical shape with an interior space for the spark plug 40. The spark plug 40 is housed inside the torch sleeve 30. As illustrated in FIG. 1, for example, a female thread 31 is provided on the inner surface near the tip of the torch sleeve 30 and a male thread 41 is provided on the outer surface near the tip of the spark plug 40. The spark plug 40 is attached to the inside of the torch sleeve 30 by screwing the male thread 41 of the spark plug 40 into the female thread 31 of the torch sleeve 30. With the spark plug 40 thus attached inside the torch sleeve 30, a space with a predetermined volume is formed between the tip of the torch sleeve 30 and the tip of the spark plug 40, and this space is configured to function as the pre-chamber C2.

As illustrated in FIG. 1, the spark plug 40 consists of an insulator 42 supported by a plug body 43. The plug body 43 is made of a heat-resistant material (e.g., a metal such as nickel). As illustrated in FIGs. 2B and 2C, at the tip of the plug body 43, facing the pre-chamber C2, a center electrode 44 as the - pole and a ground electrode 45 as the + pole are provided at predetermined intervals. The center electrode 44 penetrates the insulator 42 and reaches an external terminal 46 (see FIG. 1). By applying a voltage between the center electrode 44 and the ground electrode 45, ignition is performed between these electrodes 44 and 45, and combustion (generation of flame) in the pre-chamber C2 is performed. Other configurations of the spark plug 40 are well known and description thereof will be omitted here.

As illustrated in FIG. 1, FIG. 2B and FIG. 2C, at the tip 32 of the torch sleeve 30, the portion protruding from the cylinder head 15 (the portion facing the main chamber C1) has a tapered shape the diameter of which gradually decreases toward the piston 12 and in this tapered shape portion (tip 32) a plurality of nozzles 33, 33, ..., 34 are provided. Specifically, the tip 32 of the torch sleeve 30 has a tapered shape. The tapered shape referred to in the present invention is not limited to a tapered shape (conical shape), but also includes a shape with a curved cross-section such as a sphere or an egg shape.

More specifically, the tip 32 of the torch sleeve 30 consists of a tapered section 35 (the inner surface of which is mortise-shaped) and inclines toward the central axis of the torch sleeve 30 as it moves toward the piston 12, and a bottom plate portion 36 that is continuous with the lower end of the tapered section 35 and extends orthogonally to the central axis of the torch sleeve 30. The inclination angle of the tapered section 35 is not particularly limited, but in the present embodiment, for example, the angle of inclination is about 60° with regard to the horizontal direction. This value is not limited to this and can be set accordingly.

The tip 32 of the torch sleeve 30 is provided with nozzles 33, 33, ..., 34. These nozzles 33, 33, ..., 34 consist of through holes provided in the tapered section 35 and the bottom plate portion 36, respectively. These nozzles 33, 33, ..., 34 are paths having the function of allowing fresh air supplied to the main chamber C1 from the intake port 13 to flow into the pre-chamber C2, and the function of ejecting the flame generated in the pre-chamber C2 as a torch flame into the main chamber C1 by igniting the spark plug 40 with fresh air flowing into the pre-chamber C2.

More specifically, the nozzles 33, 33, ... are provided at four locations across the circumferential direction in the tapered section 35 at equal angular intervals in the circumferential direction, and the nozzle 34 is provided at one central location in the bottom plate portion 36.

The nozzle 34 in the bottom plate portion 36 penetrates the bottom plate portion 36 in a direction orthogonal to the extension direction of the bottom plate portion 36.

The nozzles 33, 33, ... provided in the tapered section 35 are shaped to generate a swirling flow of fresh air in the pre-chamber C2 when fresh air flows from the main chamber C1 to the pre-chamber C2 through the nozzles 33, 33, .... This shape can be defined by the extension direction of the central axis of the nozzles 33, 33, ... (see the dotted line in FIG. 2B ). Specifically, the central axis of the nozzles 33, 33, ... extends along the direction tangential to the outer edge of the tip 32 when viewed from a direction along the central axis of the tip 32 (when viewed from a direction as illustrated in FIG. 2A) and from a direction orthogonal to the central axis of the tip 32 (when viewed from the direction illustrated in FIG. 2B), the central axis points from the main chamber C1 side to the pre-chamber C2 side, near the electrodes 44, 45 of the spark plug 40. The value of the inclination angle is not limited to the above-described value, and may be set as appropriate, with 60° as the upper limit and 0° as the lower limit.

In order to increase combustion efficiency and obtain full performance of the engine 10, the ratio of the volume of the pre-chamber C2 to the total aperture area of the nozzles 33, 33, ..., 34 must be within a specified range. Therefore, the opening area of each nozzle 33, 33, ..., 34 is measured according to the volume of the pre-chamber C2 to satisfy this condition. In this case, the opening area of each of the nozzles 33, 33, ..., provided in the tapered section 35 and the opening area of the nozzle 34 provided in the bottom plate portion 36 may be the same or different from each other.

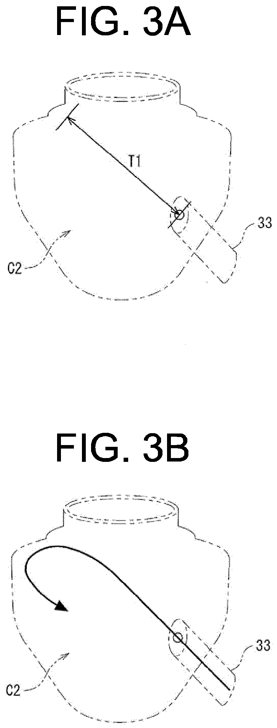

As described above, the tip 32 of the torch sleeve 30 has a tapered section 35, and by providing a plurality of nozzles 33, 33, ... in this tapered section 35, the distance between these nozzles 33, 33, ... and the residual combustion gas area around the tip of the spark plug 40 can be shortened (see distance T1 in FIG. 3A, which illustrates the shape of the pre-chamber C2 with a double-dashed line. In this FIG. 3A, only one nozzle 33 is illustrated as representative for the plurality of nozzles 33, 33, ...). Therefore, the flow velocity of the new air flowing into the pre-chamber C2 from the nozzles 33, 33, ... can reach the residual combustion gas area while maintaining a high velocity of the new air. Also, the inner diameter of the pre-chamber C2 can be made smaller (compacting the flow of fresh air in the pre-chamber C2), which allows the fresh air to easily reach the residual combustion gas area. These actions enable effective scavenging of combustion gases remaining in the residual combustion gas area and suppress pre-ignition.

In addition, by specifying the inclination angle of the central axis of the nozzles 33, 33, ... as described above, the direction of the swirl flow of fresh air flowing in the pre-chamber C2 can be closer to the horizontal vortex direction (swirl flow) than the vertical vortex direction (tumble flow), as illustrated by the solid arrow in FIG. 3B. This also allows fresh air to easily reach the residual combustion gas area. In addition, since the electrodes 44, 45 of the spark plug 40 and the openings of the nozzles 33, 33, ... (positions of the openings facing the pre-chamber C2) are close, and the adjacent nozzles 33, 33 are also close to each other in the circumferential direction of the pre-chamber C2, variation of the torch flame ejected from each of the nozzles 33, 33, ... into the main chamber C1 can be reduced. Also, after the ignition of the spark plug 40, the combustion in the pre-chamber C2 is accelerated by the swirling flow generated in the pre-chamber C2, which increases the penetration force of the torch flame ejected into the main chamber C1, and this also reduces the variation of the torch flame ejected from the respective nozzles 33, 33, ... to the main chamber C1. These actions allow for uniform combustion over the entire body of the main chamber C1, thereby suppressing knocking of the engine 10.

As described above, in the present embodiment, the spark plug 40 is housed inside the torch sleeve 30, and the space between the tip of the torch sleeve 30 and the tip of the spark plug 40 is the pre-chamber C2. The spark plug 40 is attached to the torch sleeve 30 by a male thread 41 on the outer surface near the tip of the spark plug 40 that is screwed into a female thread 31 on the inner surface near the tip of the torch sleeve 30. Therefore, when electrode wear, etc. of the spark plug 40 occurs due to long-term use, the spark plug 40 can be removed from the torch sleeve 30 and a new spark plug 40 can be installed. In other words, there is no need to replace the entire pre-chamber spark plug 20. This allows for improved maintainability and lower running costs. In addition, in a case of checking the electrode wear of the spark plug 40, the spark plug 40 can be removed from the torch sleeve 30 for carrying out the checking. In other words, it is not necessary to remove the entire pre-chamber spark plug 20 from the engine 10 for checking. Therefore, it is possible to improve maintainability and shorten the time required for maintenance work. In the above-mentioned works of Patent Documents 1 and 2, the entire pre-chamber spark plug has an integral structure, and when electrode wear occurs, etc., it is necessary to replace the entire pre-chamber spark plug, resulting in high running costs. In addition, these patented documents did not meet the demand for checking the electrode wear status. With the pre-chamber spark plug 20 according to the present embodiment, an effect can be obtained that could not be obtained with those of these Patent Documents.

In addition, in the present embodiment, the inclination direction of the nozzles 33, 33, ... when viewed from the direction along the central axis of the tip 32 is opposite to the swirl of intake air formed in the main chamber C1 by the intake port 13.

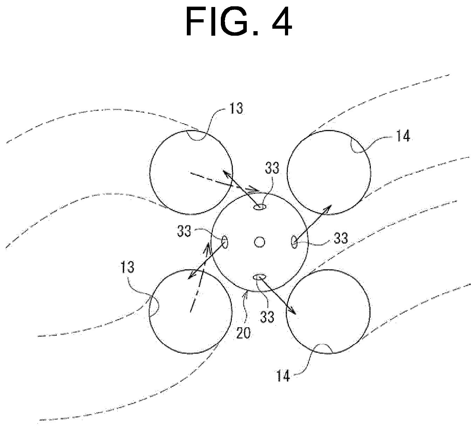

FIG. 4 illustrates the view of the main chamber C1 in the present embodiment from the piston 12 side. In this FIG. 4, the direction of swirl of intake air introduced into the main chamber C1 from each intake port 13, 13 is in the clockwise direction in the figure. In contrast, the inclination direction of the nozzles 33, 33, ... (inclination direction in the direction toward the main chamber C1) is opposite to this swirl of intake air, i.e., counterclockwise in the figure (see FIG. 2A).

In an engine 10 that does not have a fuel supply system to the pre-chamber C2 other than the nozzles, the temperature of the torch flame ejected into the main chamber C1 is relatively low, the amount of the torch flame is relatively small, and the penetration force of the torch flame is relatively small, which may cause a low combustion rate in the main chamber C1. In this case, if the intake air (mixture) between the torch flames adjacent to each other ejected from each of the plurality of nozzles 33, 33, ... can be burned early, the ratio of surface area to volume of the already burned area can be reduced and the temperature near the flame surface can be kept high, thus keeping the combustion rate in the main chamber C1. In consideration of this point, in the present embodiment, by making the direction of the torch flame injected into the main chamber C1 and the direction of the intake air swirl opposite to each other, the torch flame is not developed in the radial direction (cylinder wall direction), but in the circumferential direction, and the intake air between adjacent torch flames is burned early, thereby keeping the combustion rate in the main chamber C1 high.

Furthermore, in the present embodiment, the tip 32 of the torch sleeve 30 begins at the bottom of the cylinder head 15. Therefore, the area of the portion of the torch sleeve 30 facing the main chamber C1 can be reduced. In other words, the area of the torch sleeve 30 that receives heat from the combustion gas in the main chamber C1 can be reduced. Therefore, the temperature rise of the torch sleeve 30 can be suppressed, and the temperature rise of fresh air in the pre-chamber C2 can be suppressed to suppress pre-ignition.

### Modification of Pre-chamber Spark Plug

Next, a modification of the pre-chamber spark plug 20 will be described. In this modification, the shape of the tip 32 of the torch sleeve 30 is different from that of the above-described embodiment. Since the other configurations and functions are similar to those of the above-described embodiment, the differences from the above-described embodiment will be mainly described here.

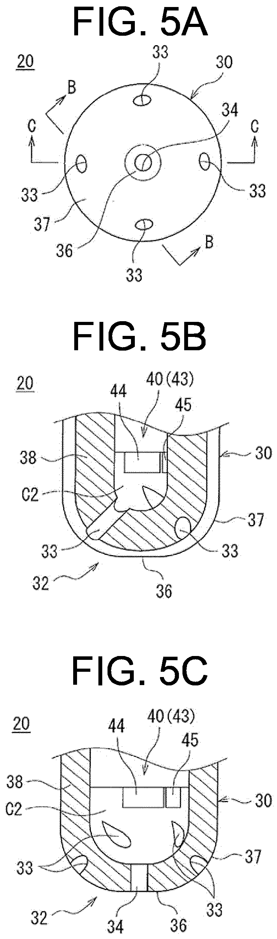

FIG. 5 illustrates the main parts of the pre-chamber spark plug 20 in this modification. FIG. 5A is a bottom view of the pre-chamber spark plug 20, FIG. 5B is a cross-sectional view along the B-B line in FIG. 5A, and FIG. 5C is a cross-sectional view along the C-C line in FIG. 5A.

As illustrated in FIGs. 5B and 5C, in the tip 32 of the torch sleeve 30, the portion protruding from the cylinder head 15 (the portion facing the main chamber C1) is tapered such that it expands toward the piston 12, and in this tapering portion (tip 32) a plurality of nozzles 33, 33, ..., 34 are provided.

Specifically, the tip 32 of the torch sleeve 30 consists of the bottom plate portion 36 extending orthogonally to the central axis of the torch sleeve 30 and a tapering portion 37 with an arc-shaped cross section that smoothly connects the bottom plate portion 36 and a side wall 38 of the torch sleeve 30.

In this modification, the tip 32 of the torch sleeve 30 is also provided with nozzles 33, 33, ..., 34. These nozzles 33, 33, ..., 34 consist of through holes in the tapering portion 37 and the bottom plate portion 36, respectively.

The nozzle 34 in the bottom plate portion 36 penetrates the bottom plate portion 36 in a direction orthogonal to the extension direction of the bottom plate portion 36.

The nozzles 33, 33, ... provided in the tapering portion 37 are shaped to generate a swirling flow of fresh air in the pre-chamber C2 when fresh air flows from the main chamber C1 to the pre-chamber C2 through the nozzles 33, 33, .... This shape can also be defined by the extension direction of the central axis of the nozzles 33, 33, .... The extension direction of the central axis of the nozzles 33, 33, ... is the same as in the above-described embodiment, so the explanation thereof is omitted here.

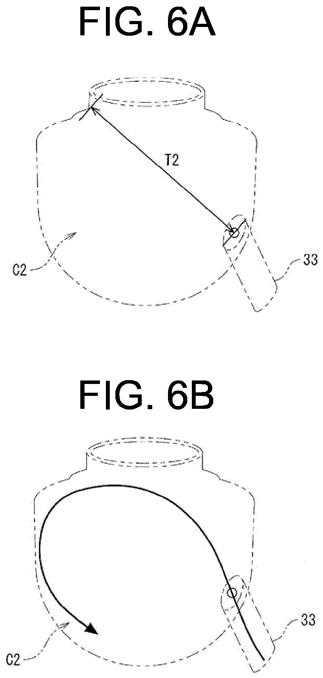

The same effect as in the above-described embodiment can be achieved in this modification. In other words, the distance between the nozzles 33, 33, ... of the torch sleeve 30 and the residual combustion gas area around the tip of the spark plug 40 can be shortened (see distance T2 in FIG. 6A, which illustrates the shape of the pre-chamber C2 in two dotted lines. This FIG. 6A also illustrates only one nozzle 33 as representative for the plurality of nozzles 33, 33, ...). This allows fresh air to easily reach the residual area of the combustion gas and effectively scavenges the combustion gas remaining in the residual area of the combustion gas, thereby suppressing pre-ignition.

By specifying the inclination angle of the central axis of the nozzles 33, 33, ... as in the case of the above-described embodiment, the direction of the swirl flow of fresh air through the pre-chamber C2 can be close to the horizontal vortex direction (swirl flow), as illustrated by the solid arrow in FIG. 6B, the residual combustion gas area is effectively swept, and variation of the torch flame ejected from each of the nozzles 33, 33, ... into the main chamber C1 can also be reduced. In addition, the combustion can be made uniform over the entire main chamber C1, and knocking of the engine 10 can be suppressed.

Also, as illustrated in FIG. 4, in this modification the inclination direction of the nozzles 33, 33, ... when viewed from the direction along the central axis of the tip 32 is opposite to the swirl of the intake air formed in the main chamber C1 by the intake port 13. This makes it possible to keep the combustion rate in the main chamber C1 high by developing the torch flame in the circumferential direction and burning the intake air between the torch flames adjacent to each other at an early stage, as in the above-described embodiment.

Furthermore, even in this modification, the tip 32 of the torch sleeve 30 starts from the bottom of the cylinder head 15. Therefore, the temperature rise of the torch sleeve 30 can be suppressed, and the temperature rise of fresh air in the pre-chamber C2 can be suppressed to suppress pre-ignition.

### Comparison with Comparative Example

Next, the contrast between the pre-chamber spark plug 20 for the above-described embodiment and the modification, and the pre-chamber spark plug for the comparative example, which is not provided with the tapered section 35 or the tapering portion 37 at the tip 32 of the torch sleeve 30, will be described.

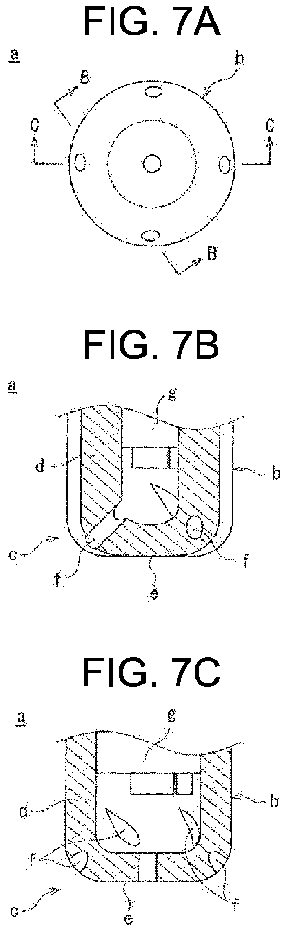

FIG. 7 illustrates the main parts of the pre-chamber spark plug a in the comparative example. FIG. 7A is a bottom view of the pre-chamber spark plug a, FIG. 7B is a cross-sectional view along the B-B line in FIG. 7A, and FIG. 7C is a cross-sectional view along line C-C in FIG. 7A.

As illustrated in FIGs 7B and 7C, the pre-chamber spark plug a in the comparative example is not provided with the tapered section 35 as in the above-mentioned embodiment or the tapering portion 37 as in the above-described modification, and the tip c of the torch sleeve b is composed of a side wall d and a bottom plate portion e.

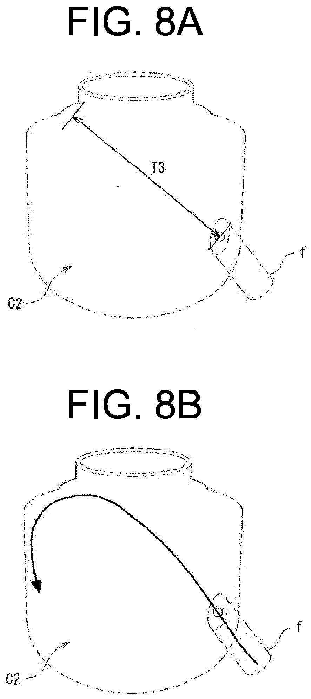

According to the configuration of the comparative example, the distance between the nozzles f, f, ... of the torch sleeve b and the combustion gas residual area around the tip of the spark plug g is not shortened (see distance T3 in FIG. 8A, which illustrates the shape of the pre-chamber C2 in double dotted lines). It is difficult for fresh air to reach the combustion gas residual area and may cause pre-ignition due to the inability to scavenge the combustion gas remaining in the combustion gas residual area.

As illustrated by the solid arrows in FIG. 8B, the direction of the swirling flow of fresh air in the pre-chamber C2 is close to the vertical vortex direction (tumble flow), which also makes it difficult for the fresh air to reach the residual combustion gas area, and thus the residual combustion gas in the residual combustion gas area cannot be swept out. This also makes it difficult for fresh air to reach the residual combustion gas area, which may result in a large variation in the torch flame ejected from each nozzle f, f, ... into the main chamber. It also makes it difficult to achieve uniform combustion throughout the entire main chamber, which may result in knocking of the engine.

The above-described embodiment and modification can eliminate all such defects.

The inventors of the present invention conducted simulations to confirm the effects of the embodiment and variation described above.

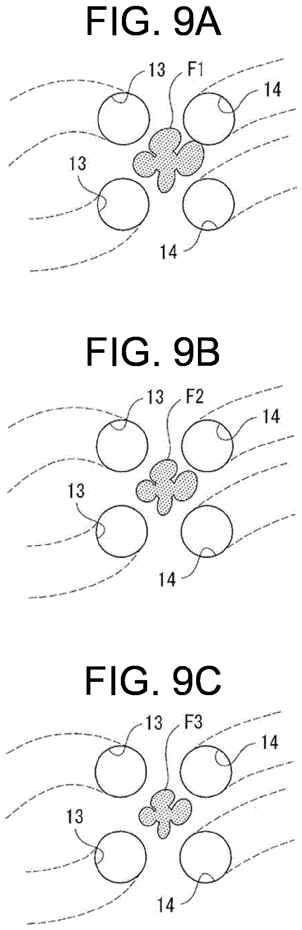

First, a simulation was performed on the shape of the torch flame that is ejected from the pre-chamber C2 into the main chamber C1. FIG. 9 illustrates the simulation results of the torch flame shape when the main chamber C1 is viewed from the piston side. FIG. 9A illustrates the result for the above-mentioned embodiment, FIG. 9B illustrates the result for the above-mentioned modification, and FIG. 9C illustrates the result for the above-mentioned comparative example. As is evident from these figures, it is confirmed that, in the case of the embodiment and the modification, the torch flame that is ejected from the pre-chamber C2 into the main chamber C1 is larger (see flames F1, F2, and F3 in each figure) and more efficient combustion is performed than in the comparative case.

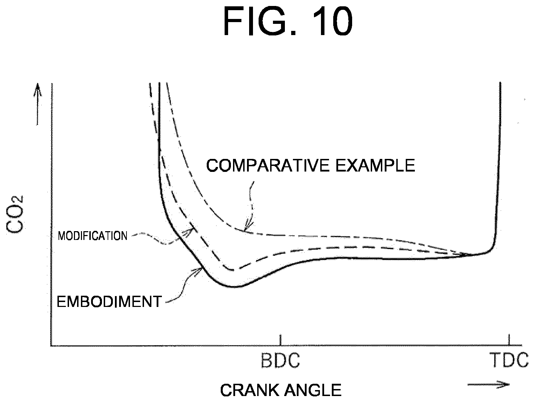

As another simulation, the amount of carbon dioxide in the pre-chamber C2 during the period from the intake stroke to the compression stroke of the engine 10 was simulated. FIG. 10 illustrates the simulation results of the amount of carbon dioxide in the pre-chamber during the period from the intake to the compression stroke of the engine in each of the above-described embodiment, the above-described modification, and the above-described comparison. In this FIG. 10, BDC is the timing when the piston 12 reaches the bottom dead center of intake, and TDC is the timing when the piston 12 reaches the top dead center of compression. As is evident from this figure, the amount of carbon dioxide in the pre-chamber is lower in the case of the embodiment and the modification compared to the comparative case. In other words, it was confirmed that the scavenging in the pre-chamber is effective.

### Other Embodiments

The invention is not limited to the above-described embodiment and the above-described variation, but all variations and applications encompassed within the scope of the claims and the scope equivalent thereto are possible.

For example, the above-described embodiment and the above-described modification described cases where the invention is applied to a hydrogen engine. The invention is not limited to this and can be applied to other engines with a pre-chamber spark plug 20.

In the above-described embodiment and the above-described modification, the case in which nozzles 33, 33, ... are provided at four locations in the tapered section 35 or the tapering portion 37 was described. The number of nozzles 33, 33, ... in the present invention is not limited to this, and may be 3 or less, or 5 or more. However, as mentioned above, the opening area of each of the nozzles 33, 33, ..., 34 should be designed so that the ratio of the volume of the pre-chamber C2 to the total opening area of the nozzles 33, 33, ..., 34 is within a predetermined range.

In the above-described embodiment and the above-described modification, the inclined direction of the nozzles 33, 33, ..., when viewed from the direction along the central axis of the tip 32, is opposite to the swirl of intake air formed in the main chamber C1 by the intake port 13. The invention is not limited to this, but the inclination direction of the nozzles 33, 33, ... when viewed from the direction along the center axis of the tip 32 may be the same direction as the swirl of the intake air formed in the main chamber C1 by the intake port 13. This configuration is effective when the temperature of the torch flame ejected into the main chamber C1 is relatively high, the volume of the torch flame is relatively large, or the penetration force of the torch flame is relatively large. In other words, by making the direction of the torch flame ejected into the main chamber C1 the same direction as the direction of the intake air swirl, this swirl can be used to rapidly spread the torch flame over a wide area, thereby enabling a high combustion rate in the main chamber C1 to be obtained.

### INDUSTRIAL APPLICABILITY

This invention is applicable to engines provided with pre-chamber spark plugs.

### REFERENCE SIGNS LIST

10 engine
12 piston
13 intake port
15 cylinder head
20 pre-chamber spark plug
30 torch sleeve
32 tip
33 nozzle
35 tapered section
37 tapering portion
40 spark plug
44 center electrode
45 ground electrode
C1 main chamber
C2 pre-chamber

## Claims

1. An engine provided with a pre-chamber spark plug, wherein
a pre-chamber is formed by a torch sleeve mounted on a cylinder head and having nozzles and a spark plug,
the torch sleeve has a tapering portion where a tip protruding from the cylinder head decreases in diameter toward a piston, and the tapering portion is provided with the nozzles.

2. The engine according to claim 1, wherein
the tapering portion of the torch sleeve is tapered.

3. The engine according to claim 1 or 2, wherein
a central axis of the nozzle,
when viewed from a direction along a central axis of the tapering portion, is inclined with respect to a tangential direction to an outer circumferential edge of the tapering portion from a main chamber side of the engine to the pre-chamber side within an angle range with an upper limit of 60°, and
when viewed in a direction orthogonal to a central axis of the tapering portion, is directed from the main chamber side to the pre-chamber side toward a vicinity of an electrode of the spark plug.

4. The engine according to claim 3, wherein
a direction of a torch flame that is ejected from the pre-chamber into the main chamber through the nozzle is opposite to a swirl of intake air formed in the main chamber by an intake port of the engine.

5. The engine according to claim 3, wherein
a direction of a torch flame that is ejected from the pre-chamber into the main chamber through the nozzle is in the same direction as a swirl of intake air formed in the main chamber by an intake port of the engine.

6. The engine according to claim 1 or 2, wherein the tapering portion of the torch sleeve starts from a bottom surface of the cylinder head.
